# EUROPEAN PATENT APPLICATION

(11) **EP 4 046 964 A1**
(43) Date of publication of application: **24.08.2022**
(21) Application number: 21158062.6
(22) Date of filing: 19.02.2021
(51) Int. Cl.: C01G 23/00, C01G 23/053, C01G 49/14

(54) **METHOD FOR THE PRODUCTION OF A TITANIUM-CONTAINING FEEDSTOCK FOR THE CHLORIDE PROCESS**

(71) Applicant: Kronos International, Inc., 51373 Leverkusen (DE)
(72) Inventor: The designation of the inventor has not yet been filed

(57) **Abstract**

The invention is related to a method for the production of titanium-containing feedstock for the chloride process using titanium-containing material. Further, the invention refers to the use of this method to produce a titanium-containing feedstock for the chloride process with a titanium content of at least 90 wt.%

## Description

### Field of the invention

The invention relates to a method for the production of titanium-containing feedstock for the chloride process using titanium-containing material. Further, the invention refers to the use of this method to produce a titanium-containing feedstock for the chloride process with an equivalent titanium dioxide content of at least 90 wt.%

### Technological background of the invention

Titanium dioxide is either manufactured by the well-established sulfate process or the chloride process. The latter uses a titanium-containing feedstock which is reacted with chlorine gas and carbon to obtain titanium tetrachloride and other chlorides of metals and metalloids present in the feedstock. The thus obtained chlorides are subsequently separated by re-sublimation or distillation thereby exploiting their varying boiling points. The titanium tetrachloride is finally transformed to titanium dioxide, and the chlorine which is set free by the afore-mentioned reaction is separated and reused in the reaction with the titanium-containing feedstock. Amongst other reasons, the reuse of chlorine makes the chloride process economically attractive.

In case the titanium-containing feedstock is comprised of a significant amount of components other than titanium, it is very burdensome or even prohibitive to reuse the chlorine for the reaction with the titanium-containing feedstock. Because chlorides other than titanium tetrachloride are separated and removed from the process the chlorine from these components cannot be easily recovered and it therefore is lost for the internal recycling.

In order to compensate for the chlorine loses, new chlorine must be added to the system which is associated with increased costs. The higher the content of components other than titanium the higher must be the compensation for the losses. Therefore, feedstocks with a high titanium dioxide content of at least 90 wt.% and a low content of further elements, which can be transformed into their chlorides, particularly iron, aluminum, magnesium, calcium, manganese and others like vanadium, chromium, zirconium, nickel, zinc, cobalt, copper, niobium, etc., and result in byproducts of rather low commercial interest, are substantially preferred. These beneficial criteria are met by titanium containing slags and natural rutile. Disadvantageously, the production of titanium containing slags requires high energy input and natural rutile resources are becoming increasingly limited worldwide. The demand for natural rutiles is also increasing continuously due to the attractiveness of the chloride process. The increasing demand leads to higher prices for these rutiles. Further, titanium sources such as ilmenite are available in higher amounts, but possess significantly lower titanium dioxide content, usually far lower than 60 wt.%, which would make the chloride process significantly more expensive for the reasons given above.

In general, further criteria must be met by the feedstock. For example, the mean particle diameter distribution of the feedstock should ideally be in the range of more than 100 µm and less than 400 µm in order to achieve appropriate residence time for the carbochlorination in the fluidized bed reactor. The particles should moreover be mechanically stable and thus, should not decay, disintegrate, decompose, deagglomerate or show any significant size reduction by mechanical transportation or conveying which is often pneumatic. Preferably, the feedstock should exhibit a bulk density of more than 1500 kg per m³ which would contribute to ensure the desired fluidization regime in the reactor in which the reaction to the chlorides is performed. In case the feedstock is of low density, the feedstock is hydraulically discharged from the reactor without having participated on the carbochlorination reaction. The discharge is supported by exothermic character of the reaction that contributes to the gas expansion and thereby to the enhancement of gas velocities in the fluidized bed reactor.

In addition, it would be economically beneficial to use raw materials like ilmenite concentrates with a titanium dioxide content of far less than 60 wt.-%, possibly as low as a titanium dioxide content of between 30 and 50 wt.-% feedstock for the chloride process.

Therefore, there is a need in the art for a method for the production of titanium-containing feedstock for the chloride process.

### Object and summary of the invention

It is the object of the invention to provide an improved method for producing a titanium dioxide-containing feedstock for the chloride process, derived from the raw material having titanium dioxide content between 30 wt.-% and 60 wt.-%, or more particularly having titanium dioxide content of 40 to 45 wt.-%, like e.g. the ilmenite concentrate from the Tellnes mine in Norway.

This object is achieved by the method of the present invention.

This method provides the manufacture of a titanium-containing feedstock for the chloride process to obtain titanium dioxide which is used as a white pigment in high quality paints, lacquers and the like. As a result, natural rutiles and expensive, manufactured slags are not the only eligible source as starting material for the chloride process. The method advantageously allows to use a raw material of low titanium dioxide content like ilmenite concentrate and to increase its equivalent titanium dioxide content to at least 90 wt.% which makes the material a suitable feedstock for the chloride process to produce titanium dioxide for both, pigmentary and non-pigmentary applications. Aside from the above advantages using such enriched feedstock, there is no need to use other feedstocks with low titanium content and increased use of chlorine rendering the chloride process economically unattractive.

Therefore, in a first aspect, the invention relates to a method for the production of titanium containing feedstock for the chloride process, where the method is comprised of the following steps:
a) contacting sulfuric acid with the titanium-containing starting material to obtain a sulfated mixture comprised of titanium oxysulfate;
b) contacting the sulfated mixture with water and/or diluted sulfuric acid to obtain a sulfated dispersion comprised of dissolved titanium oxysulfate;
c) separating the dissolved titanium oxysulfate from the sulfated dispersion;
d) concentrating the dissolved titanium oxysulfate to obtain concentrated titanium oxysulfate;
e) hydrolyzing the concentrated titanium oxysulfate to obtain an aqueous dispersion comprised of titanium oxyhydrate;
f) filtering the aqueous dispersion to obtain a filtered titanium oxyhydrate and washing the filtered titanium oxyhydrate to obtain a washed titanium oxyhydrate;
g) adding from 0.1 wt.% to 30.0 wt.% titanium-containing materials to the washed titanium oxyhydrate to obtain a titanium oxyhydrate mixture; and
h) calcinating the titanium oxyhydrate mixture at a temperature of from 950 °C to 1250 °C, preferably 1080 °C to 1180 °C to obtain a titanium-containing feedstock.

In a second aspect, the invention is directed to the use of the method disclosed herein to produce a titanium-containing feedstock for the chloride process with a titanium content of at least 90 wt.% based on the total weight of the feedstock

Further advantageous embodiments of the invention are stated in the dependent claims.

### Description of the invention

These and other aspects, features and advantages of the invention become obvious to the skilled person from the study of the following detailed description and claims. Each feature from one aspect of the invention can be employed in any other aspect of the invention. Numerical ranges stated in the format "from x to y" include the mentioned values and the values that are within the respective measuring accuracy as known to the skilled person. If several preferred numerical ranges are stated in this format, it is a matter of course that all ranges formed by the combination of the various end points are also included.

"At least one" as used herein means 1 or more, i.e. 1, 2, 3, 4, 5, 6, 7, 8, 9, or more.

The present invention can be conducted in known apparatuses suitable for the sulfate process.

In step a), the titanium-containing starting material is contacted with sulfuric acid to obtain a sulfated mixture comprised of titanium oxysulfate. In a preferred embodiment, said starting material is selected from ilmenites, perovskites, rutiles, titanites or a mixture thereof. The titanium-containing starting material has a titanium dioxide content of from 30 wt.% to 60 wt.%, preferably between 40 wt.% to 45 wt.% referred to the total weight of the material. If suitable, the material can be dried and milled prior to step a).

In step b), the sulfated mixture is contacted with water and/or diluted sulfuric acid to obtain a sulfated suspension comprised of dissolved titanium oxysulfate. The used water and/or diluted sulfuric acid may be optionally added at an elevated temperature.

In a preferred embodiment, in step b) or after step b) and prior to step c), iron scrap is added to the sulfated dispersion to ensure the reduction of Fe(III) to Fe(II). Iron scrap used can be of low quality, i.e. it can contain impurities like aluminum, cobalt, copper, manganese, nickel, niobium, silicon, vanadium, zinc and the like. After the reduction, the Fe(III) content in the sulfated dispersion is at most 5 wt.%, preferably at most 3 wt.% and even more preferably at most 0.5 wt.% referred relative to the titanium dioxide equivalent content.

In step c), the dissolved titanium oxysulfate is then separated from the sulfated dispersion, which also comprises several solids such as unreacted ilmenite residue after contacting ilmenite with sulfuric acid. Techniques such as sedimentation, coagulation, flocculation, centrifugation or filtration can be used. The Fe(II) ions are separated and iron sulfate can be obtained via crystallization.

In the next step d), the dissolved titanium oxysulfate is concentrated to obtain concentrated titanium oxysulfate. Preferably, the titanium oxysulfate concentration is adjusted to a concentration of between 80 g/l to 220 g/l, more preferably of between 100 g/l and 140 g/l. Evaporation, cooling evaporation, membrane filtration such as reverse osmosis, nanofiltration and crystallization are techniques which can be used to concentrate the dissolved titanium oxysulfate. This concentration adjustment is more preferably achieved by heating under reduced pressure.

Then, in step e), the concentrated titanium oxysulfate is hydrolyzed to obtain an aqueous dispersion comprised of titanium oxyhydrate. This can be conducted at elevated temperature, preferably between 110 °C and 115 °C. To that end, the vessel used for the hydrolyzation can be directly or indirectly heated, if needed. The skilled person knows how to conduct this step to obtain titanium oxyhydrate particles of a suitable diameter which facilitates the subsequent processing steps such as filtration and the like. Alternatively, the hydrolysis can be conducted under enhanced pressure in order to e.g. reduce the hydrolysis time and to further influence the particle diameter of titanium oxyhydrate in the dispersion.

In a preferred embodiment, 0.1 wt.% to 4.0 wt.%, preferably 0.2 wt.% to 1.0 wt.% precipitation seed is added, which is obtained either by the Mecklenburg process or the Blumenfeld process and where the ratio given above is based on the total weight of titanium oxyhydrate in step e).

Then, in step f), the aqueous dispersion is filtered to obtain a filtered titanium oxyhydrate and the filtered titanium oxyhydrate is washed to obtain a washed titanium oxyhydrate. This can be accomplished by any suitable device. Preferably, the technique of displacement filtration is used, which is known to the skilled person. Preferably, filtering and washing of the titanium oxyhydrate is conducted to achieve a wash water impurity level measured as total iron of at most 1 wt.% referred to the total weight of the wash water.

In step g), 0.1 to 30.0 wt.% titanium-containing material can be added to the washed titanium oxyhydrate to obtain a titanium oxyhydrate mixture. This contributes to the economic advantages of the present invention, as the obtained feedstock possess a high titanium content, is low-cost and obtained without the need for rare and conclusively expensive natural rutiles or the like. The titanium-containing material possesses a titanium dioxide equivalent content of at least 70 wt.% referred to the total weight of the material. The preferred titanium-containing material is selected from the group consisting of ilmenites, ilmenite residues from the sulfate process, rutiles, rutile residues from the chloride process, slags, slag residues from chloride process, perovskites, titanites or mixtures thereof.

In a preferred embodiment, in step g), or after step g) and prior to step h), 0.1 wt.% to 2.0 wt.% of a growth-promoting additive is added, where the fraction is based on the total weight of titanium oxyhydrate. Preferably, the growth-promoting additive is aluminum hydroxide or an aluminum salt, for example, aluminum sulfate.

In step h), the titanium oxyhydrate mixture is calcined at a temperature of from 950 °C to 1250 °C, preferably of from 1080 °C to 1180 °C to obtain a titanium-containing feedstock. By the means of calcination, the mixture is agglomerated and sintered appropriately. By using these parameters, a titanium-containing feedstock is obtained which possesses a bulk density of at least 1500 kg/m³, where 40 wt.% of the titanium-containing feedstock possess a particle diameter of at least 0.5 mm. Preferably, in addition, not more than 25 wt.% of the titanium-containing feedstock possess a particle diameter of greater than 6 mm.

Preferably, the titanium-containing feedstock is fractioned in step i) to remove fine particles and coarse particles. "Fine particles", as used herein, refers to a particle with a diameter of less than 0.1 µm, preferably less than 0.08 µm. "Coarse particles", as used herein, refers to a particle with a diameter of at least 6 mm. Under certain circumstances known to the skilled person, the removal of fine particles can be omitted.

The method steps described herein are conducted in the following order: a), b), c), d), e), f), g), h) and then i).

In sum, the method according to the invention is like the well-established sulphate route to manufacture titanium dioxide. The gist of this invention lies in that in step g) a titanium-containing material is added in order to obtain a titanium-containing feedstock for the chloride process, which is inexpensive and provides a reliable source of titanium-containing feedstock for the chloride process independent from limited natural resources. Yet another advantage of this invention lies in that in step h) the mixture is agglomerated and sintered to a very hard material meeting all the requirements put on the feedstock suitable for chloride process.

In another aspect, the present invention relates to the use of the method as disclosed herein to manufacture a titanium-containing feedstock for the chloride process with a titanium content of at least 90 wt.% based on the total weight of the feedstock. Preferably, the feedstock has a titanium content of at least 95 wt.% based on the total weight of the feedstock.

## Claims

1. A method for the production of titanium-containing feedstock for the chloride process, the method is comprised of the following steps:
a) contacting sulfuric acid with the titanium-containing starting material to obtain a sulfated mixture comprised of titanium oxysulfate;
b) contacting the sulfated mixture with water and/or diluted sulfuric acid to obtain a sulfated dispersion comprised of dissolved titanium oxysulfate;
c) separating the dissolved titanium oxysulfate from the sulfated dispersion;
d) concentrating the dissolved titanium oxysulfate to obtain concentrated titanium oxysulfate;
e) hydrolyzing the concentrated titanium oxysulfate to obtain an aqueous dispersion comprised of titanium oxyhydrate;
f) filtering the aqueous dispersion to obtain a filtered titanium oxyhydrate and washing the filtered titanium oxyhydrate to obtain a washed titanium oxyhydrate;
g) adding from 0.1 wt.% to 30.0 wt.% titanium-containing material to the washed titanium oxyhydrate to obtain a titanium oxyhydrate mixture; and
h) calcinating the titanium oxyhydrate mixture at a temperature of from 950 °C to 1250 °C, preferably 1080 °C to 1180 °C to obtain a titanium-containing feedstock.

2. The method according to claim 1, **characterized in, that**
the titanium-containing feedstock possess a bulk density of at least 1500 kg/m³ and 40 wt.% of the titanium-containing feedstock possess a particle diameter of at least 0.5 mm.

3. The method according to claim 1 or 2, **characterized in, that**
the method comprises the further step:
i) fractioning the titanium-containing feedstock to remove fine particles and coarse particles.

4. The method according to any one of claims 1 to 3, **characterized in, that** the titanium-containing starting material is selected from the group consisting of ilmenites, perovskites, rutiles, titanites or a mixture thereof.

5. The method according to any one of claims 1 to 4, **characterized in, that** the titanium-containing material is selected from the group consisting of ilmenites, ilmenite residues from sulfate process, rutiles, rutile residues from chloride process, slags, slag residues from chloride process, perovskites, titanites or mixtures thereof.

6. The method according to any one of claims 1 to 5, **characterized in, that**
in step b), or after step b) and prior to step c), iron scrap is added to the sulfated dispersion; and/or
in step d), the titanium oxysulfate concentration is adjusted to a concentration of between 80 g/l to 220 g/l, preferably of between 100 g/l and 140 g/l; and/or
in step e), 0.1 wt.% to 4.0 wt.%, preferably 0.2 wt.% to 1.0 wt.% precipitation seed is added obtained by either the Mecklenburg process or the Blumenfeld process based on the total weight of titanium oxyhydrate; and/or
in step e) hydrolyzing is conducted at elevated temperature using direct and/or indirect heat; and/or
in step f), the titanium oxyhydrate is filtered and washed to achieve a wash water impurity level measured as total iron of at most 1 wt.% referred to the total weight of the wash water; and/or
in step g), or after step g) and prior to step h), 0.1 wt.% to 2.0 wt.% of a growth-promoting additive is added based on the total weight of titanium oxyhydrate.

7. The method according to claim 6, **characterized in, that**
the concentration adjustment in step d) is achieved by heating.

8. The method according to claim 6, **characterized in, that**
the growth-promoting additive is aluminum sulfate or aluminum hydroxide.

9. Use of the method according to any one of claims 1 to 8 to produce a titanium-containing feedstock for the chloride process with an equivalent titanium dioxide content of at least 90 wt.% based on the total weight of the feedstock.

10. The use according to claim 9, **characterized in, that**
the feedstock has an equivalent titanium dioxide content of at least 95 wt.% based on the total weight of the feedstock.
